Europäisches Patentamt

European Patent Office

Office européen des brevets

(19)

(11) Publication number: **0 265 648 B1**

## EUROPEAN PATENT SPECIFICATION

(12)

(45) Date of publication of patent specification: **27.03.91**  (51) Int. Cl.⁵: **G01M 11/04**, G02B 7/00, G01B 9/025

(21) Application number: **87113465.6**

(22) Date of filing: **15.09.87**

(54) Thermally stable vacuum table.

(30) Priority: **29.10.86 US 924489**

(43) Date of publication of application:
**04.05.88 Bulletin 88/18**

(45) Publication of the grant of the patent:
**27.03.91 Bulletin 91/13**

(84) Designated Contracting States:
**DE FR GB**

(56) References cited:
**US-A- 4 076 393**

**IBM TECHNICAL DISCLOSURE BULLETIN vol. 23, no. 11, April 1981, pages 4941, 4942; F.R. GRUNDON et al.: "Adjustable optics mounting assembly for vacuum use"**

(73) Proprietor: **International Business Machines Corporation**
**Old Orchard Road**
**Armonk, N.Y. 10504(US)**

(72) Inventor: **Strope, Douglas Howard**
**Box 129, Penn. Ave.**
**Apalachin, N.Y. 13732(US)**

(74) Representative: **Klein, Daniel Jacques Henri et al**
**Compagnie IBM France Département de Propriété Intellectuelle**
**F-06610 La Gaude(FR)**

## Description

### 1. Field of the Invention

This invention relates to an improved article support apparatus for a holographic interferometry system. More particularly, the invention relates to a thermally stable vacuum table and associated assembly which minimize motion of the article caused by thermal expansion of system components other than the article itself, yet do not restrict thermal expansion of the article.

### 2. Description of the Related Art

Holographic interferometry is a known technique utilizing the interference of coherent light to observe small changes in dimension. The dimensions of an article are detected in an interference pattern cast upon a wavefront recording media by both light reflected from the article and reference light. The wavefront recording media is typically a holographic plate or film. Because of its sensitivity to small dimensions, the technique is used to observe the flatness or contour of an article's surface. In addition, the temperature of an article can be changed between different observations of the same article, thereby allowing one to determine the change in an article's dimensions over a given change in temperature. The coefficient of thermal expansion of the article can thus be determined.

The accuracy of a holographic measurement or observation is known to be diminished if the article experiences rigid body motion of more than a quarter of a wavelength of the light used. Detrimental motion of the article can occur during an exposure of the plate at a particular temperature, or between the exposures at different temperatures. Detrimental motion during an actual exposure can be caused by vibrations, thereby resulting in poor image quality. Vibrations are typically reduced by mounting the entire apparatus in a non-vibratory environment. Furthermore, the effect of vibrations can be minimized by employing a light source of high frequency, such as a ruby laser of 20 nanosecond pulsewidth. Detrimental motion between exposures at different temperatures refers to any motion of the article not attributable to the thermal expansion of the article itself. Several article support apparatuses are known, each allowing detrimental motion of the article between exposures of the plate.

One known support apparatus employs clamps to maintain the positional integrity of the article. The clamps apply a force along at least one axial direction, the force being large enough to prevent movement of the article with respect to the support assembly. However, the applied force inherently inhibits thermal expansion of the article in the axial direction in which the force is applied. The force also causes stress which affects the thermal expansion of the article in axial directions other than that in which the force is applied. Finally, thermal expansion of the support apparatus during temperature changes causes movement of the article thereon. All of these factors contribute to the inaccuracy in thermal expansion measurements of clamped articles.

Another known support apparatus employs a vacuum table. The vacuum table has a horizontal surface for engaging an article, the surface including perforations through which a vacuum may be drawn to maintain the article upon the surface. However, past vacuum tables have been manufactured from materials with high coefficients of thermal expansion. Again, thermal expansion of the support apparatus during temperature changes causes movement of the article thereon, contributing to inaccuracies in thermal expansion measurements. Also, the mounting of unusually shaped articles on a horizontal surface of the support apparatus prevents application of the interfering light in a single horizontal plane. This occurs when the article's shape makes it impossible to mount it so that a horizontal beam of light reflects off a surface of the article in the same horizontal plane (i.e. the surface of the article cannot be mounted in a vertical plane). Components of the holographic system must then be inconveniently mounted in different horizontal planes, thereby decreasing system stability.

Another problem encountered in holographic interferometry systems relates to the maintenance of a thermally stable environment. As previously mentioned, the temperature must be adjusted between exposures of the holographic plate to measure the coefficient of thermal expansion of an article. The temperature can be adjusted by such crude methods as heating with air from a conventional blow dryer and sensing temperature with a thermocouple. These methods do not maintain thermally uniform and stable environments. Once the approximate desired temperature of the article is achieved, thermal uniformity and stability are required to accurately measure the temperature at the time of exposure. One way to maintain a constant temperature would be to mount the support apparatus and article thereon in an oven. However, ovens are manufactured from materials of high coefficient of expansion and are therefore dimensionally unstable. Thermal expansion of the oven materials upon which the support apparatus is mounted causes the same detrimental movement of the article as that previously described.

## SUMMARY OF THE INVENTION

It is therefore the object of this invention to improve apparatuses for supporting an article in a holographic interferometry system to maintain a thermally stable environment and to minimize motion of the article caused by thermal expansion of system components other than the article itself, yet not restrict thermal expansion of the article.

The object of this invention is accomplished by a thermally stable vacuum table manufactured from a ceramic material having a very low thermal coefficient of expansion. The vacuum table is associated with a vacuum table assembly which allows for the proper maintenance of a thermally stable environment. The thermally stable vacuum table and environment minimize motion of the article caused by thermal expansion of system components other than the article itself. The vacuum table is also designed to support an article with one of its surfaces in a vertical plane, allowing for the holographic plate and other holographic interferometry system components to operate in a single horizontal plane.

The proposed apparatus allows for the mounting of system components in a single horizontal plane.

## BRIEF DESCRIPTION OF THE DRAWING

Fig. 1 is a front view of the vacuum table assembly including the thermally stable vacuum table.

Fig. 2 is a side view of the assembly shown in Fig. 1.

Fig. 3 is a schematic illustration of a holographic interferometry system including the vacuum table assembly of Figs. 1-2.

## DESCRIPTION OF THE PREFERRED EMBODIMENT

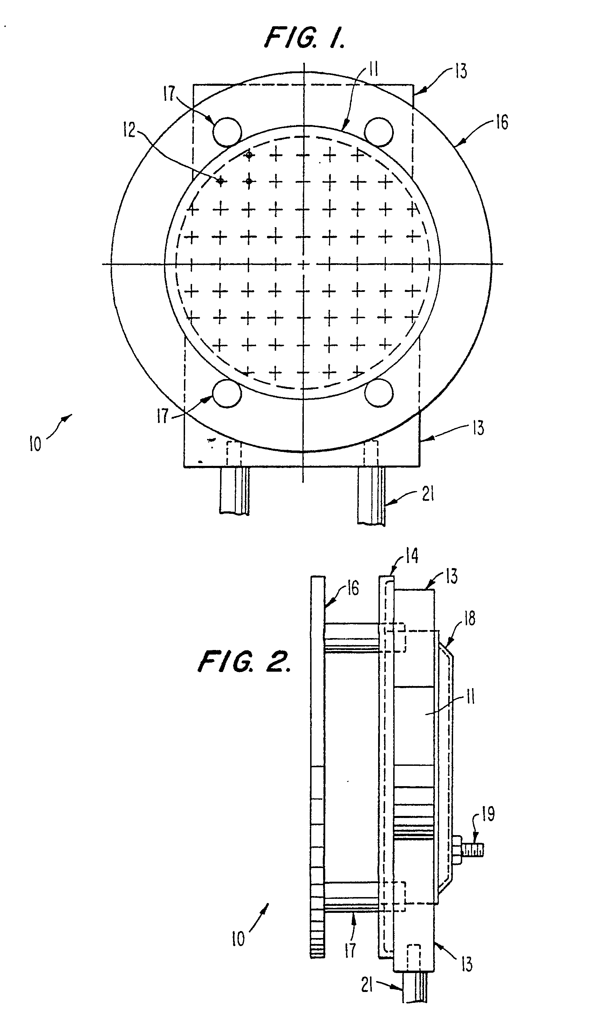

Referring to Figs. 1-2, vacuum table assembly 10 is shown, including thermally stable vacuum table 11. Vacuum table 11 includes apertures 12 through which a vacuum can be pulled to secure an article thereto. Because vacuum table 11 is oriented in a vertical plane, components of the holographic system may be more conveniently mounted in a single horizontal plane, thereby increasing system stability. This is particularly true for thin, flat articles. Vacuum table 11 can be manufactured from any material having a coefficient of thermal expansion less than $1 \times 10^{-7}$ per degree Centigrade. An example of such a material is a crystallized lithium aluminosilicate glass ceramic composed essentially of 76.5% $SiO_2$, 21% $Al_2O_3$, 4% LiO, 2.7% CaO, 2% $ZrO_2$, 1.8% $TiO_2$ and 1% ZnO. This material is sold under the trademark "CER-VIT" by Owens-Illinois, Inc. Other suitable materials include low thermal expansion titanium silicate ceramics The use of such materials maintains a substantially constant operative relationship between the article and vacuum table 11 and vacuum table assembly 10, thereby minimizing motion of the article caused by thermal expansion of the article support apparatus.

Vacuum table 11 is lodged between two blocks 13 of a metal having a low coefficient of thermal expansion. Metal materials are considered most appropriate because they are most easily shaped and formed as necessary. For example, mounting holes for support rods 21 must be bored in blocks 13. Low thermal expansion ceramics would require special methods of manufacturing to create the holes without shattering the blocks, such as ultrasonic techniques. The metal should be of low thermal expansion so as not cause movement of vacuum table 11 during changes in temperature. A suitable metal is 36% nickel steel having a coefficient of thermal expansion of approximately $1 \times 10^{-6}$ per degree Centigrade. Support rods 21 can be made from any material strong enough to support vacuum table assembly 10 and attach to blocks 13. The securement of blocks 13 to support rods 21 and to vacuum table 11 can be accomplished by a variety of techniques, such as those using high temperature epoxy adhesives.

Rods 17 secure blocks 13 to faceplate 16. Faceplate 16 can be manufactured from any material transparent to the particular wavelength of light used in the applicable holographic interferometry system. Clear quartz is typically suitable. Rods 17 are preferably manufactured from the same low thermal expansion material as is vacuum table 11. Ring 14 is secured to blocks 13; the inner diameter of ring 14 is approximately equal to the diameter of vacuum table 11. Pan-shaped disk 18 is secured to the back side of vacuum table 11 and includes nozzle 19. Nozzle 19 is connected by hoses (not shown) to a vacuum pump (also not shown) for drawing a vacuum through apertures 12. Ring 14 can be manufactured from any material which can be bonded to blocks 13, such as aluminum. Disk 18 can be manufactured from any material which can be bonded to vacuum table 11, one of such suitable materials again being aluminum. Epoxy, rubbers vulcanizable at room temperature, or other suitable adhesives can be used to affix the aforementioned securements.

A band (not shown in the drawing), including a rubber seal, may be clamped to faceplate 16 and ring 14. The band can also be manufactured from aluminum. The area between faceplate 16 and vacuum table 11 is then usable as a thermally stable chamber. Two openings in the band are connected by hoses to an oven which circulates temperature-controlled air through the chamber. Because vacuum table 11 is incorporated into a wall of the chamber the temperature of the article may be accurately controlled without placing vacuum table assembly 10 in an oven where it would be supported by materials of high coefficient of thermal expansion.

OPERATION OF A HOLOGRAPHIC INTERFEROMETRY SYSTEM INCLUDING THE INVENTION

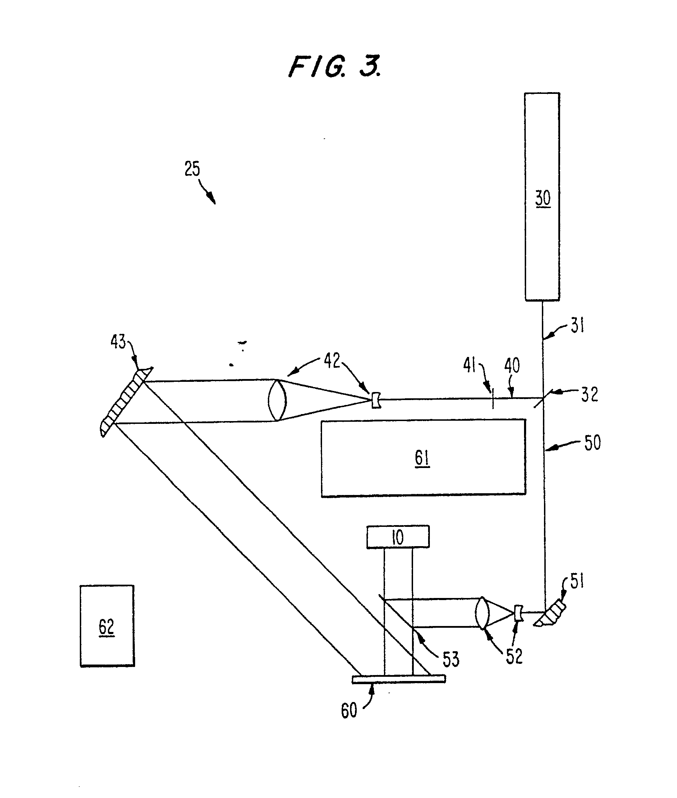

Referring to Fig. 3, the operation of holographic interferometry system 25, including vacuum table assembly 10 substantially as shown in Figs. 1-2, will now be described with respect to measuring the thermal coefficient of expansion of an article. Initially, the band is not clamped to vacuum table assembly 10. The article (not shown) is selected and appropriately placed so that a flat surface of the article is in parallel contact with vacuum table 11 and the surface of the article to be observed is facing away therefrom. Articles not having an appropriate flat surface must first be attached to a flat mounting block of low thermal expansion material. A thermocouple is attached to the article. Vacuum pump 62, initially off, is activated to secure the article upon vacuum table 11. (For simplicity, the connections between vacuum pump 62 and vacuum table assembly 10 are not shown in Fig. 3.)

The article being vacuum-mounted upon vacuum table 11, the band is clamped to faceplate 16 and ring 14. Oven 61 is then activated to stabilize the temperature at a known level within the now-sealed chamber. (Again, the connections between oven 61 and vacuum table assembly 10 are not shown in Fig. 3.) The thermocouple is used to monitor the temperature within the chamber. After the temperature is stabilized and recorded, laser 30 is pulsed to emit a beam of coherent light 31. A suitable laser is a pulsed ruby laser emitting light of a wavelength of approximately 6600 angstroms. A continuous laser, such as a helium-neon source, is also suitable but requires a shutter or other device for pulsing emitted light.

Light beam 31 is divided by beam splitter 32 into reference beam 40 and object beam 50. Reference beam 40 passes through neutral density filter 41, lenses 42, and reflects off mirror 43 to expose holographic plate 60. Object beam 50 reflects off mirror 51, passes through lenses 52, and reaches beam splitter 53. Light reflected off of beam splitter 53 is directed through faceplate 16 and toward the article on vacuum table 11. After reflecting off the article, object beam 50 again reaches beam splitter 53. Light transmitted through beam splitter 53 exposes holographic plate 60. Holographic plate 60 is exposed for a predetermined interval of time according to the transmission characteristics of neutral density filter 41 and the pulsewidth of laser 30. It is significant that beam splitter 53 directs object beam 50 straight in to vacuum table assembly 10 and the article therein. This arrangement allows for the observation of changes in dimension in the direction perpendicular to the plane of vacuum table 11. For the observation of changes in dimension in other directions, the angle of impingement of object beam 50 must be adjusted.

The temperature of the chamber is then raised a prescribed amount by activating oven 61 to heat the air circulating therein. After the temperature is again stabilized and recorded, laser 30 is again pulsed to expose holographic plate 60 to reference beam 40 and object beam 50 for a predetermined interval of time. Holographic plate 60 is then chemically developed in a manner known to one of ordinary skill and not herein further disclosed. After development, holographic plate 60 is again placed in the path of reference beam 40, object beam 50 being blocked. The developed interference pattern is then viewed for measurement of the changes in dimension of the article, as known to one of ordinary skill. Having determined the changes and dimension, and knowing the temperature range across which the changes occurred, the coefficient of thermal expansion can be calculated.

Note that in the above-described holographic interferometry system beam splitters 32 and 53 and filter 41 are selected to have particular transmittances of the light used. These transmittances adjust the intensities of reference beam 40 and object beam 50 reaching holographic plate 60. The preferred ratio of intensity of reference beam 40 reaching holographic plate 60 to object beam 50 reaching holographic plate 60 is different depending upon the article. For example, articles having direct reflecting surfaces may be observed at a ratio of approximately 10 while articles having diffuse surfaces may be observed at a ratio of approximately 1.

While the invention has been described with respect to a preferred embodiment thereof, it will be understood by those skilled in the art that various changes in detail may be made therein without departing from the invention as claimed. For example, the maximum coefficients of thermal expansion have been given as positive values only, but should be considered in terms of absolute values, positive or negative. In addition, the values of coefficients of thermal expansion are for temperatures at which interferometric measurements are commonly taken, such as 0-150 degrees Centigrade. Light of wavelengths other than those previously mentioned, or other forms of electromagnetic radiation, can be used with only minor modifications to the holographic interferometry system. Finally, the invention may be used in a variety of other interferometric applications including the detection of dimensional changes due to the effects of humidity, the detection of assembly stresses between dissimilar materials, and the detection of warpage or flatness.

**Claims**

1. An apparatus for supporting an article in a holographic interferometry system comprising:
a temperature controlled chamber, a wall (16) of said chamber substantially transparent to electromagnetic radiation; and
a thermally stable and vertically oriented vacuum table (11) incorporated into a wall of said chamber.

2. The apparatus of claim 1 wherein said vacuum table is manufactured from a ceramic material having a coefficient of thermal expansion less than $1 \times 10^{-7}$ per degree Centigrade.

3. A holographic interferometry system comprising:
a temperature controlled chamber, a wall (16) of said chamber substantially transparent to electromagnetic radiation;
a thermally stable and vertically oriented vacuum table (11) incorporated into a wall of said chamber;
vacuum means (62) connected to said chamber for securing an article to said vacuum table;
means (30) for generating a beam of electromagnetic radiation in operative relationship to said article;
a wavefront recording media (60) positioned in the path of electromagnetic radiation reflected from said article; and
means (61) connected to said chamber for adjusting the temperature therein, said article changing dimension as the temperature within said chamber is adjusted, the changes in dimension of said article recorded on said wavefront recording media, said temperature controlled chamber and said vacuum table not restricting the changes in dimension of said article, the operative relationship among said vacuum means, said chamber, and said electromagnetic radiation generating means remaining substantially constant.

4. The holographic interferometry system of claim 3 wherein said vacuum table is manufactured from a ceramic material having a coefficient of thermal expansion less than $1 \times 10^{-7}$ per degree Centigrade.

**Revendications**

1. Dispositif pour supporter un article dans un système d'interférométrie holographique, comprenant :
une chambre, dont la température est réglée et dont une paroi (16) est sensiblement perméable au rayonnement électromagnétique; et
une table à dépression (11) thermiquement stable, orientée verticalement et incorporée dans une paroi de ladite chambre.

2. Dispositif selon la revendication 1, dans lequel ladite table à dépression est réalisée en un matériau céramique possédant un coefficient de dilatation thermique inférieur à $1 \times 10^{-7}$ par degré centigrade.

3. Système d'interférométrie holographique comprenant:
une chambre, dont la température est réglée et dont une paroi (16) est sensiblement perméable au rayonnement électromagnétique; et
une table à dépression (11) thermiquement stable, orientée verticalement et incorporée dans une paroi de ladite chambre;
des moyens (62) d'établissement d'une dépression raccordés à ladite chambre de manière à fixer un article à ladite table à dépression;
des moyens (30) pour produire un faisceau de rayonnement électromagnétique selon une relation opérationnelle avec ledit article; un support (60) d'enregistrement de fronts d'ondes, positionné dans le trajet du rayonnement électromagnétique réfléchi par ledit article; et
des moyens (61) raccordés à ladite chambre pour régler la température dans cette dernière, ledit article changeant de dimensions lorsque la température à l'intérieur de ladite chambre a été ajustée, les changements de dimensions dudit article étant enregistrés sur ledit support d'enregistrement des fronts d'ondes, ladite chambre, dont la température est commandée, et ladite table à dépression ne limitant pas les changements de dimensions dudit article, la relation opérationnelle entre lesdits moyens à dépression, ladite chambre et lesdits moyens de production du rayonnement électromagnétique restant sensiblement constante.

4. Système d'interférométrie holographique selon la revendication 3, dans lequel ladite table à dépression est réalisée en un matériau céramique possédant un coefficient de dilatation thermique inférieur à $1 \times 10^{-7}$ par degré centigrade.

**Ansprüche**

1. Einrichtung zum Halten eines Gegenstandes in enem holographischen Interferometriesystem mit

    einer temperaturgesteuerten Kammer, wobei eine Wand (16) der Kammer für elektromagnetische Strahlung im wesentlichen transparent ist und

    einem thermisch stabilen und vertikal ausgerichteten Vakuumtisch (11), der mit einer Wand der Kammer verbunden ist.

2. Einrichtung nach Anspruch 1, bei welcher der Vakuumtisch aus einem keramischen Material hergestellt ist, das einen thermischen Ausdehnungskoeffizienten kleiner als $1 \times 10^{-7}$ pro Grad Celsius aufweist.

3. Holographisches Interferometriesystem mit

    einer temperaurgesteuerten Kammer, wobei eine Wand (16) der Kammer, die für elektromagnetische Strahlung im wesentlichen transparent ist,

    einem thermisch stabilen und vertikal ausgerichteten Vakuumtisch (11), der mit einer Wand der Kammer verbunden ist,

    Vakuummitteln (62), die mit der Kammer zum Befestigen eines Gegenstandes an dem Vakuumtisch verbunden sind,

    Mitteln (30) zum Erzeugen eines elektromagnetischen Strahlungsbündels in einer wirksamen Beziehung zu dem Gegenstand

    einem Wellenfront-Aufzeichnungsmedium (60), das in dem Wege der elektromagnetischen Strahlung gelegen ist, die von dem Gegenstand reflektiert wird und

    Mitteln (61), die mit der Kammer zum Einstellen der darin vorhandenen Temperatur verbunden sind, wobei der Gegenstand während die Temperatur innerhalb der Kammer eingestellt wird die Abmessung ändert, die Änderungen in der Abmessung des auf dem Wellenfront-Aufzeichnungsmedium aufgezeichneten Gegenstandes, die temperaturgesteuerte Kammer und der Vakuumtisch die Änderungen in der Abmessung des Gegenstandes nicht einschränken, die wirksame Beziehung unter den Vakuummitteln, der Kammer und den Mitteln zum Erzeugen der elektromagnetischen Strahlung im wesentlichen konstant bleibt.

4. Holographisches Interferometriesystem nach Anspruch 3, bei welchem der Vakuumtisch aus einem keramischen Material hergestellt ist, das einen thermischen Ausdehnungskoeffizienten kleiner als $1 \times 10^{-7}$ pro Grad Celsius aufweist.

## FIG. 1.

## FIG. 2.

# FIG. 3.